# EUROPÄISCHE PATENTSCHRIFT

(11) **EP 2 493 787 B1**
(45) Veröffentlichungstag und Bekanntmachung des Hinweises auf die Patenterteilung: **14.05.2014**
(21) Anmeldenummer: 10737752.5
(22) Anmeldetag: 21.06.2010
(51) Int. Cl.: B65G 1/127, E05D 13/00

(54) **EINSEITIG BETÄTIGBARES TÜRELEMENT FÜR LAGERSYSTEME**
DOOR ELEMENT FOR STORAGE SYSTEMS, WHICH CAN BE CONTROLLED FROM ONE SIDE
ÉLÉMENT DE PORTE À ACTIONNEMENT UNILATÉRAL POUR DES SYSTÈMES DE STOCKAGE

(30) Priorität: 29.10.2009 DE 102009051193
(43) Veröffentlichungstag der Anmeldung: 05.09.2012
(73) Patentinhaber: Kardex Produktion Deutschland GmbH, 86476 Neuburg/Kammel (DE)
(72) Erfinder: KOLLMANN, Wolfgang, 87772 Pfaffenhausen (DE)
(74) Vertreter: Grünecker, Kinkeldey, Stockmair & Schwanhäusser
(86) Internationale Anmeldenummer: PCT/EP2010/003722
(87) Internationale Veröffentlichungsnummer: WO 2011/050870

(56) Entgegenhaltungen:
- EP-A1- 0 338 225
- WO-A1-02/16233
- DE-A1- 3 438 180
- US-A- 5 688 168
- US-B1- 6 814 658

## Beschreibung

Die Erfindung betrifft eine automatische Lagervorrichtung mit einer Beschickungs- und/oder Entnahmeöffnung, mit einem in einer Höhenrichtung verschieblichen Türelement zum Verschließen der Beschickungs- und/oder Entnahmeöffnung und mit einem Halteorgan, das mechanisch mit dem Türelement gekoppelt ist und einer Gewichtskraft des Türelements entgegenwirkt.

Lagervorrichtungen der vorbenannten Art sind bekannt. Sie sind meist als Lagerlifte ausgeführt, in denen eine Vielzahl von Lagerplatzen über- und nebeneinander angeordnet sind, auf denen Lagergüter entweder direkt oder mit Hilfe sie tragender Lagergutträger eingelagert werden. Beim Einlagern werden die Lagergüter bzw. Lagergutträger beispielsweise von einer Bedienperson in einer Beschickungs- und/oder Entnahmestation positioniert, um dort von einer automatischen Fördervorrichtung aufgenommen und zu einem Lagerplatz gebracht zu werden. Wenn der eingelagerte Lagergutträger oder das Lagergut von der Bedienperson an einem Bediengerät der Lagervorrichtung angefordert wird, wird er oder es von der Fördervorrichtung von seinem Lagerplatz zur Beschickungs- und/oder Entnahmestation transportiert und dort aus dem Lager entnommen.

Beispielsweise ist in der Druckschrift WO 02/16233 A1 ein gattungsgemäßes automatisches Umlauflagersystem gezeigt, dessen Beschickungs- und Entnahmeöffnung mit einer vertikal beweglichen Schiebetür versehen ist, die seitlich in zwei Schienen geführt sowie durch ein mittig an der Tür befestigtes und über zwei Umlenkrollen geführtes Seil gehalten ist, an dem ein Gegengewicht für die Tür angebracht ist.

Um das Innere der Lagervorrichtung vor unbefugtem Zugriff sowie einem Eindringen von Schmutz bzw. vor schädlichen Umwelteinflüssen zu schützen und/oder beispielsweise bei klimatisierten Lagervorrichtungen einen Wärmeaustausch mit der Umgebung der Lagervorrichtung zu minimieren, ist die Beschickungs- und/oder Entnahmeöffnung mit dem Türelement verschließbar ausgestaltet. Die Beschickungs- und/oder Entnahmeöffnung und dementsprechend auch das Türelement können mehrere Meter breit sein. Trotzdem muss das Türelement von der Bedienperson leicht zu öffnen sein, damit zeitliche Verzögerungen beim Beschicken und/oder Entnehmen von Lagergütern so gering wie möglich sind.

Der Erfindung liegt folglich die Aufgabe zugrunde, das Türelement der vorbenannten Lagervorrichtung möglichst verzögerungsfrei öffnen und schließen zu können.

Bei einer erfindungsgemäßen Lagervorrichtung wird diese Aufgabe dadurch gelöst, dass wenigstens ein weiteres Halteorgan quer zur Höhenrichtung vom Halteorgan beabstandet mit dem Türelement gekoppelt ist und der Gewichtskraft des Türelements entgegenwirkt, dass die beiden Halteorgane jeweils an sich bezüglich einer vertikalen Mittellinie gegenüberliegenden Abschnitten des Türelementes angeordnet sind, dass die beiden Halteorgane mit einem in einer Führung verschieblich gehaltenen Gegengewicht für das Türelement und durch ein Synchronisierungsmittel synchron beweglich gekoppelt sind.

Diese Lösung hat den Vorteil, dass die Gewichtskraft des Türelementes möglichst gleichmäßig auf die Halteorgane verteilt und das Türelement somit um seine Mittellinie ausbalanciert gehalten werden kann. Dies mindert die Gefahr eines Verkantens des Türelementes beim Öffnen und/oder Schließen, insbesondere wenn das Türelement seitlich geführt und von der Bedienperson manuell in der Höhenrichtung verschoben wird.

Durch das Synchronisierungsmittel werden die beiden Halteorgane bzw. die an sie gekoppelten Abschnitte des Türelements stets auf gleicher Höhe gehalten. Falls das Türelement mit Hilfe der Halteorgane hängend gehalten ist, unterstützen sie eine Öffnungsbewegung des Türelementes, indem die Halteorgane der Gewichtskraft des Türelementes entgegenwirken. Wenn die Halteorgane ein sich nach unten öffnendes Türelement abstützen, verhindern sie dessen unbeabsichtigtes Öffnen.

Die erfindungsgemäße Lösung kann mit den folgenden weiteren jeweils für sich vorteilhaften Ausgestaltungsformen beliebig kombiniert und weiter verbessert werden:

Gemäß einer ersten möglichen vorteilhaften Ausgestaltungsform einer erfindungsgemäßen Lagervorrichtung kann vorgesehen sein, dass die wenigstens zwei Halteorgane jeweils ein Zugmittel aufweisen, das jeweils über ein in der Höhenrichtung oberhalb des Türelementes angeordnetes Umlenkorgan geführt ist, und dass das Synchronisierungsmittel die Umlenkorgane im Wesentlichen drehfest koppelt. Mit Hilfe der Zugmittel kann das Türelement hängend gehalten werden. Die Zugmittel können am Umlenkorgan einfach umgelenkt werden, um den oberhalb der Beschickungs- und/oder Entnahmeöffnung von einem das Türelement und die Halteorgane umfassenden Türsystem eingenommenen Raum möglichst gering zu halten. An den Umlenkorganen können die Zugmittel beispielsweise um 180° umgelenkt nach unten geführt oder aufgerollt werden und müssen nicht samt dem Türelement linear nach oben verschoben werden, wie es beispielsweise der Fall wäre, wenn die Halteorgane als vertikales Gestänge ausgeführt wären.

Gemäß einer weiteren Verbesserungsmöglichkeit einer erfindungsgemäßen Lagervorrichtung kann ein Öffnen eines nach oben verschieblichen Türelementes insbesondere dadurch erleichtert werden, indem ein Gegengewicht vorgesehen ist, das über die Halteorgane mit dem Türelement verbunden ist, wobei eine Gegengewichtskraft des Gegengewichts größer ist als die Gewichtskraft des Türelements. Dabei kann ein erster Abschnitt der Halteorgane jeweils mit dem Türelement und ein zweiter Abschnitt der Halteorgane jeweils mit dem Gegengewicht gekoppelt sein, wobei die Umlenkorgane jeweils zwischen dem ersten und zweiten Abschnitt angeordnet sind bzw. diese unterteilen. Das Türelement und das Gegengewicht können jeweils an den über die Umlenkorgane geführten Halteorganen eingehängt sein. Die Gewichtskraft und die Gegengewichtskraft wirken entgegengesetzt. Da das Gegengewicht schwerer als das Türelement ist, bewegt sich das Türelement automatisch in eine geöffnete obere Position, wenn es zuvor in einer geschlossenen unteren Position gehalten bzw. verriegelt ist und die Verriegelung gelöst wird. Somit kann das Türelement ohne oder nur unter geringem Kraftaufwand von einer Bedienperson oder einem mechanischen Antrieb geöffnet werden.

Gemäß einer weiteren möglichen vorteilhaften Ausgestaltungsform einer erfindungsgemäßen Lagervorrichtung kann vorgesehen sein, dass das Türelement mit einem Ausgleichsgewicht versehen ist und dass eine die Gewichtskraft des Türelementes und eine Ausgleichsgewichtskraft des Ausgleichsgewichts umfassende Türgesamtgewichtskraft größer ist als die Gegengewichtskraft des Gegengewichts. Beim hängend gehaltenen Türelement bewirkt eine die Gegengewichtskraft übersteigende Türgesamtgewichtskraft, dass sich das Türelement ohne weitere äußere Krafteinwirkungen stets in die geschlossene untere Position bewegt und dort verbleibt. Dies kann insbesondere von Vorteil sein, wenn das Türelement beispielsweise durch elektrische oder elektronisch gesteuerte Hilfsmittel in einer oberen geöffneten Position gehalten wird und im Falle eines Stromausfalles ein Verschließen der Beschickungs- und/oder Entnahmeöffnung sichergestellt sein soll. Ein automatisches Verschließen bei Stromausfall verbessert insbesondere den Brandschutz und kann zum Einhalten von Brandschutzrichtlinien behilflich bzw. erforderlich sein.

Gemäß einer weiteren Ausgestaltungsform einer erfindungsgemäßen Lagervorrichtung können bzw. kann die Herstellung, der Transport, die Montage und Dimensionierung des Gegengewichts und/oder Ausgleichsgewichts dadurch vereinfacht werden, dass das Gegengewicht und/oder das Ausgleichsgewicht jeweils aus einer Vielzahl von Gewichtsmodulen zusammengesetzt sind bzw. ist. Insbesondere bei variablen Beschickungs- und/oder Entnahmeöffnungsgrößen können das Gegengewicht und das Ausgleichsgewicht einfach aus einer den jeweiligen Anforderungen entsprechenden Anzahl von Gewichtsmodulen gebildet werden.

Der modulare Aufbau des Gegengewichtes und/oder des Ausgleichsgewichtes kann insbesondere im Hinblick auf eine einfache Realisierung verschiedener Türbreiten von Vorteil sein. Bei zunehmender Breite nimmt sowohl die Gewichtskraft des Türelementes als auch die Gegengewichtskraft des Gegengewichtes zu. Die Zunahme von Gewichtskraft und die Gegengewichtskraft ist jedoch nicht zwangsläufig proportional. Vielmehr ist es möglich, dass die Gewichtskraft des Türelementes bei zunehmender Breite stärker zunimmt als die Gegengewichtskraft. Indem das Gegengewicht so ausgelegt ist, dass es stets schwerer als oder mindestens genauso schwer wie die Tür ist, kann das System aus Gewichts- und Gegengewichtskraft einfach durch im Bedarfsfall am Türelement angebrachte Gewichtsmodule ausbalanciert bzw. so eingerichtet werden, dass die Gewichtskraft die Gegengewichtskraft übersteigt. Das aus Türelement und Gegengewicht gebildete System kann unter Umständen aber auch ohne zusätzliche Gewichtsmodule in Balancestellung sein.

Für eine vereinfachte Montage der Gewichtsmodule kann gemäß einer weiteren vorteilhaften Ausgestaltungsform einer erfindungsgemäßen Lagervorrichtung vorgesehen sein, dass wenigstens ein Gewichtsmodul am Türelement und/oder Ausgleichsgewicht eingehängt ist.

Die Montage der Gewichtsmodule lässt sich insbesondere dadurch vereinfachen, wenn gemäß einer weiteren vorteilhaften Ausgestaltungsform einer erfindungsgemäßen Lagervorrichtung vorgesehen ist, dass das wenigstens eine Gewichtsmodul ein Befestigungselement aufweist, das quer zur Höhenrichtung auf eine Aufnahme am Türelement und/oder dem Gegengewicht aufgeschoben ist und eine Modulgewichtskraft des Gewichtsmoduls zumindest teilweise trägt. Um das Gewichtsmodul in seiner aufgeschobenen Position einfach zu sichern, kann ein Sicherungsmittel vorgesehen sein, durch welches das wenigstens eine Gewichtsmodul gegen Entnahme gesichert ist. Dieses Sicherungsmittel kann beispielsweise ein Verschieben des Gewichtsmoduls quer zur Höhenrichtung bzw. entgegen der Richtung, in der das Gewichtsmodul in der Aufnahme aufgeschoben ist, verhindern.

Gemäß einer weiteren vorteilhaften Ausgestaltungsform einer erfindungsgemäßen Lagervorrichtung kann eine Feststelleinrichtung vorgesehen sein, mit deren Hilfe das Türelement in einer Öffnungsposition arretierbar ist. Die Arretierungsfunktion kann es einer Bedienperson erleichtern, das Türelement in der Öffnungsposition zu halten. Somit kann insbesondere beim manuellen Bedienen des Türelementes die Bedienperson sich besser auf das Beschicken und/oder Entnehmen von Lagergut konzentrieren und hat dazu beide Hände zur Verfügung. Des Weiteren hilft das Arretieren, ein Erreichen der Öffnungsposition zu bestätigen. So erhält die Bedienperson oder eine elektromechanische Bedieneinrichtung durch das Arretieren eine Bestätigung, dass das Türelement sich in der Öffnungsposition befindet.

Die Feststelleinrichtung kann gemäß einer weiteren vorteilhaften Ausgestaltungsform einer erfindungsgemäßen Lagervorrichtung einfach bereitgestellt werden, indem sie wenigstens einen Elektromagneten und/oder Dauermagneten umfasst. Der Magnet kann an der Beschickungs- und/oder Entnahmeöffnung oder dem Türelement angeordnet sein, und mit einem jeweils am Türelement oder der Beschickungs- und/oder Entnahmeöffnung befestigten ferromagnetischen Arretierungselement zusammenwirken, wenn dieses in der Öffnungsposition mit dem Magneten in mechanischen Kontakt oder zumindest in dessen Wirkungsbereich gelangt. Der Elektromagnet ist vorteilhaft, wenn sich die Gesamtgewichtskraft eines nach oben zu öffnenden Türelementes größer ist als die Ausgleichsgewichtskraft. Sollte das Türelement in der Öffnungsposition durch den Elektromagneten arretiert sein und es zu einem Stromausfall kommen, so ist der Elektromagnet kraftlos und das Türelement bewegt sich automatisch in eine geschlossene untere Position bzw. Schließposition.

Gemäß einer weiteren vorteilhaften Ausgestaltungsform einer erfindungsgemäßen Lagervorrichtung kann die Feststelleinrichtung synergetisch genutzt sein, wenn sie gleichzeitig als Sicherungsmittel dient. Somit kann bei der Montage der Feststelleinrichtung das wenigstens eine Gewichtsmodul, gleichzeitig gegen Entnahme gesichert werden und es sind keine zusätzlichen Sicherungsmittel außen der Feststelleinrichtung erforderlich, was die Arbeitseffizienz beim Errichten einer erfindungsgemäßen Lagervorrichtung verbessert. Um das öffnen und Verschließen der Beschickungs- und/oder Entnahmeöffnung einer erfindungsgemäßen Lagervorrichtung zu vereinfachen, kann gemäß einer weiteren vorteilhaften Ausgestaltungsform vorgesehen sein, dass zumindest eines der beiden Halteorgane und/oder das Synchronisierungsmittel kraftübertragend mit einem Elektroantrieb gekoppelt sind bzw. ist, wobei der Elektroantrieb und die Feststelleinrichtung durch elektronische Kommunikationsmittel signalübertragend miteinander verbunden sind. Der Elektroantrieb kann sowohl eine Öffnungs- als auch Schließbewegung des Türelementes unterstützen. Damit der Elektroantrieb den Arretierungskräften der Feststelleinrichtung nicht entgegen arbeiten muss, ist die Funktionsweise des Elektroantriebes vorteilhaft auf die der Feststelleinrichtung abgestimmt. Wenn das Türelement beispielsweise in der Öffnungsposition arretiert ist und der Elektroantrieb das Türelement in die geschlossene Position überführen soll, wird kurz vor einem Wirken einer elektrischen Antriebskraft des Elektroantriebes die Feststelleinrichtung gelöst und der Elektroantrieb braucht die Arretierungskraft der Feststelleinrichtung nicht zu überwinden.

Gemäß einer weiteren vorteilhaften Ausgestaltungsform einer erfindungsgemäßen Lagervorrichtung kann vorgesehen sein, dass neben dem Türelement ein Bediengerät für die Lagervorrichtung angeordnet und das Türelement in einem Griffbereich bzw. einer Armspannweite einer Bedienperson vom Bediengerät entfernt mit einem Griff versehen ist. Mit anderen Worten kann die Bedienperson gleichzeitig das Bediengerät und den Griff betätigen, die auf vorteilhafte Art und Weise innerhalb der Armspannweite der Bedienperson angeordnet sind. Derartige Maße sind in Deutschland beispielsweise in der DIN 33402-2 wiedergegeben. Insbesondere ist bei den angegebenen Maßen der medialen, als das 50. Perzentil heranzuziehen, wobei vorzugsweise die Bevölkerungsgruppe im Alter von 18 bis 65 Jahren zugrunde zu legen ist. Zu beachten ist, dass dieses Maß oder andere Körpermaße in einzelnen Ländern und Regionen unterschiedlich sein können und beispielsweise im ostasiatischen Raum kleiner sind als in Europa. Insbesondere kann als Armspannweite im Sinne der Patentschrift ein Bereich von beispielsweise 1300 bis 1700 mm angenommen werden. Noch vorteilhafter ist, statt der Arm-, die Ellenbogenspannweite der Bedienperson von beispielsweise 450 bis 550 mm zur Bemessung eines maximalen Abstands zwischen dem Griff und dem Bediengerät heranzuziehen.

Um den Griff des Türelementes vorteilhafterweise neben dem Bediengerät im Griffbereich der Bedienperson anzuordnen, kann gemäß einer weiteren vorteilhaften Ausgestaltungsform einer erfindungsgemäßen Lagervorrichtung vorgesehen sein, dass eine in der Höhenrichtung verlaufende Mittelachse des Griffes in der Seitrichtung von der vertikalen Mittellinie des Türelementes beabstandet ist. Bei einem wohl ausbalanciert gehaltenen Türelement kann der Griff einseitig am Türelement angeordnet und betätigt werden, ohne dass eine Fehlfunktion bzw. ein Verkanten des Türelementes zu befürchten ist.

Im Folgenden wird die Erfindung anhand vorteilhafter Ausführungsformen mit Bezug auf die beigefügten Zeichnungen beispielhaft näher erläutert. Die beschriebenen Ausführungsformen stellen dabei lediglich mögliche Ausgestaltungen dar, bei denen jedoch die einzelnen Merkmale, wie oben beschrieben ist, unabhängig voneinander realisiert und weggelassen werden können. In der Figurenbeschreibung werden der Einfachheit halber gleiche Merkmale und Elemente mit gleichen Bezugszeichen versehen, um Wiederholungen zu vermeiden und eine Konsistenz der verwendeten Bezugszeichen zu wahren.

Es zeigen:
- Fig. 1: eine schematische Perspektivansicht einer erfindungsgemäßen Lagervorrichtung;
- Fig. 2: eine schematische Perspektivansicht einer Beschickungs- und/oder Entnahmeöffnung der in Fig. 1 gezeigten Lagervorrichtung;
- Fig. 3: eine schematische Perspektivansicht einer Ausführungsform eines Türsystems im Inneren einer erfindungsgemäßen Lagervorrichtung;
- Fig. 4: eine schematische Perspektivansicht eines Details A des in Fig. 3 gezeigten Türsystems;
- Fig. 5: eine schematische Perspektivansicht eines Details B des in Fig. 3 gezeigten Türsystems;
- Fig. 6: eine perspektivische Teilansicht einer weiteren Ausführungsform eines Türsystems einer erfindungsgemäßen Lagervorrichtung; und
- Fig. 7: eine Vorderansicht eines Details C des in Fig. 6 gezeigten Türsystems.

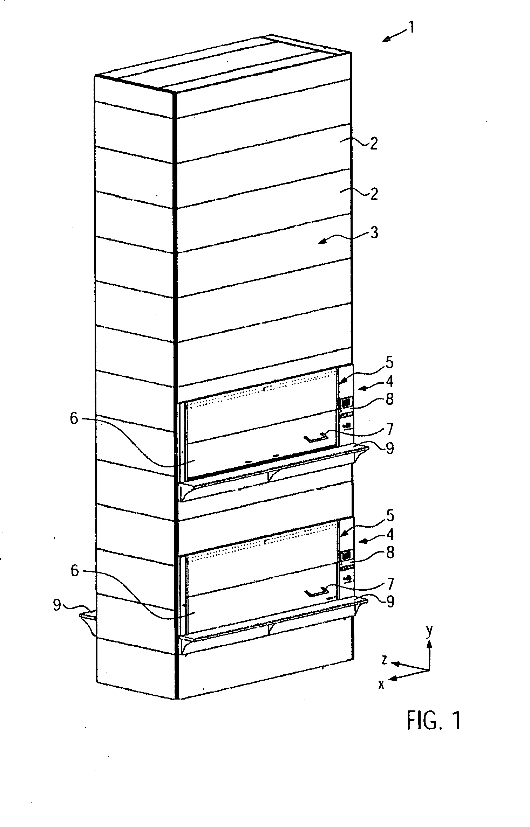

Zunächst wird eine erfindungsgemäße Lagervorrichtung 1 unter Bezug auf Fig. 1 beschrieben, welche die Lagervorrichtung 1 in einer schematischen Perspektivansicht zeigt. Die Lagervorrichtung 1 hat einen von Verkleidungselementen 2 umschlossenen Innenraum. Die Verkleidungselemente 2 bilden ein Gehäuse 3 der Lagervorrichtung 1.

Die Lagervorrichtung 1 erstreckt sich in einer Höhenrichtung Y über mehrere Stockwerke. Auf zwei in der Höhenrichtung Y übereinander liegenden Stockwerkebenen ist jeweils eine Beschickungs- und/oder Entnahmestation 4 der Lagervorrichtung 1 angeordnet. An der Beschickungs- und/oder Entnahmestation 4 können Bedienpersonen bzw. Benutzer wie beispielsweise Lagerfachkräfte oder auch automatische Transportwägen (nicht gezeigt) Lagergüter bzw. Lagergüter aufnehmende Lagergutträger (nicht gezeigt) aus der Lagervorrichtung 1 entnehmen oder in diese einlagern.

Die Beschickungs- und/oder Entnahmestation 4 umfasst eine Beschickungs- und/oder Entnahmeöffnung 5, die mit einem Türsystem (hier noch nicht gezeigt) versehen ist, von dem in der in Fig. 1 gezeigten Darstellung lediglich ein Türelement 6 sichtbar ist. Zum manuellen Betätigen des Türelementes 6 ist dieses mit einem Griff 7 versehen. Weitere Bestandteile des Türsystems sind weiter unten erläutert.

Des Weiteren umfasst die Beschickungs- und/oder Entnahmestation 4 ein Bediengerät 8, an dem eine Bedienperson die Lagervorrichtung 1 steuern bzw. Lagergüter anfordern oder einzulagernden Lagergütern einen Lagerplatz zuweisen kann. Zur vereinfachten Beschickung und Entnahme ist die Beschickungs- und/oder Entnahmestation 4 ferner mit einer Konsole 9 versehen, die einen Tischbereich bildet und auf der einzulagernde und gerade ausgelagerte Güter bzw. Lagergutträger abgelegt werden können.

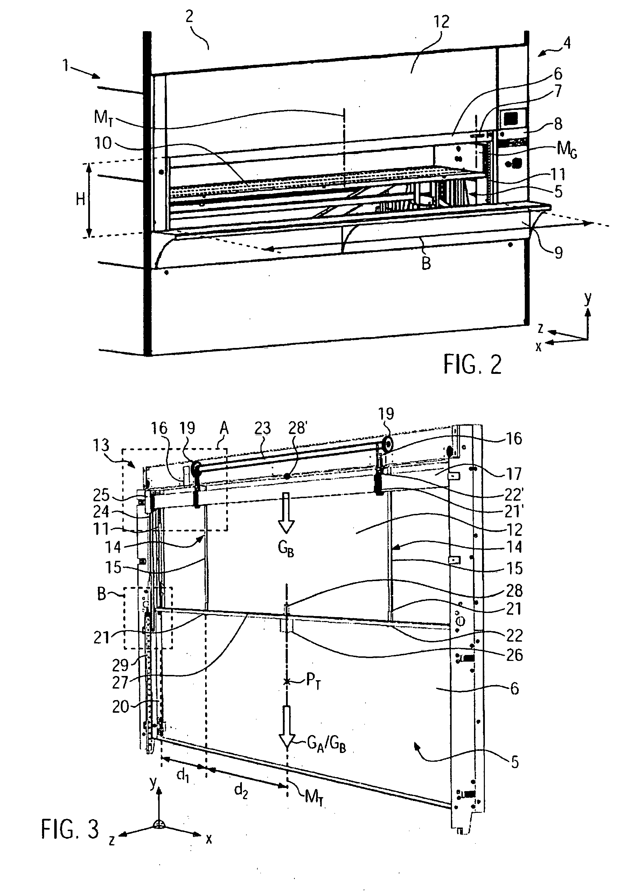

In Fig. 2 ist die Beschickungs- und/oder Entnahmestation 4 einer erfindungsgemäßen Lagervorrichtung 1 in einer schematischen Perspektivansicht gezeigt. Das Türelement 6 befindet sich in einer Öffnungsposition O, in der es in der Höhenrichtung Y bis zu einem Anschlag (hier noch nicht gezeigt) nach oben geschoben ist. Somit ist nahezu eine gesamte Höhe H und Breite B der Beschickungs- und/oder Entnahmeöffnung 5 geöffnet und eine Bedienperson kann auf eine in einer Beschickungs- und/oder Entnahmeposition befindliche automatische Fördereinrichtung 10 durch die Beschickungs- und/oder Entnahmeöffnung 5 in einer quer zur Höhenrichtung Y verlaufenden Querrichtung Z zugreifen.

Die Höhe H ist in der Höhenrichtung Y und die Breite B in einer sowohl quer zur Höhen- Y als auch Querrichtung Z verlaufenden Seitrichtung X der Lagervorrichtung 1 bemessen. Die Höhe H und Breite B der Beschickungs- und/oder Entnahmeöffnung 5 sind den jeweiligen Anforderungen an die Lagervorrichtung bzw. gemäß den Maßen der einzulagernden Güter variabel konstruierbar. Das Türelement 6 bzw. das einen hier noch nicht gezeigten Funktionsmechanismus des Türelementes 6 umfassendes Türsystem sollte unter möglichst geringem konstruktiven und planerischen Aufwand an verschiebende Höhen H und Breiten B anpassbar ausgestaltet sein.

Des Weiteren ist Fig. 2 zu entnehmen, dass eine in der Höhenrichtung Y verlaufende Mittelachse M_{G} des Griffes 7 in der Seitrichtung X beabstandet von einer in der Höhenrichtung Y verlaufenden Mittellinie M_{G} des Türelementes 6 verläuft. Mit anderen Worten ist der Griff 7 seitlich bzw. einseitig am Türelement 6 angebracht. Der seitlich am Türelement 6 angebrachte Griff 7 ist in Griffweite vom Bediengerät 8 angeordnet. Eine Bedienperson kann somit gleichzeitig das Bediengerät 8 und den Griff 7 betätigen, ohne sich von der Stelle bewegen zu müssen.

Über den Griff manuell eingeleitete, auf das Türelement 6 wirkende Öffnungskräfte oder Schließkräfte bewirken also ein Drehmoment um einen auf der Mittellinie M_{T} des Türelementes 6 liegenden Mittelpunkt (hier noch nicht gezeigt) des Türelementes. Da seitliche Ränder des Türelementes 6 in einer in der Höhenrichtung Y verlaufenden vertikalen Führung 11 verschieblich geführt sind, besteht bei dem einseitigen Betätigen des Türelementes 6 am in diesem Ausführungsbeispiel seitlich bzw. asymmetrisch zur Türmittellinie M_{T} angebrachten Griff durch das erzeugte Drehmoment die Gefahr, das Türelement 6 beim Öffnen oder Schließen in der Führung 11 zu verkanten.

Ferner ist in Fig. 2 ein Abdeckelement 12 ersichtlich, mit dem ein oberhalb der Beschickungs- und/oder Entnahmeöffnung 5 liegender Bereich des Türsystems ähnlich wie der Innenraum der Lagervorrichtung 1 durch die Verkleidungselemente 2 abgedeckt ist.

In Fig. 3 ist eine perspektivische Innenansicht eines Türsystems 13 einer erfindungsgemäßen Lagervorrichtung 1 dargestellt. Das Türelement 6 befindet sich in der Höhenrichtung Y in einer unteren Schließposition C, in der es die Beschickungs- und/oder Entnahmeöffnung 5 verschließt. Das Türelement 6 ist in seinen seitlichen Führungen 11 in der Höhenrichtung Y verschieblich gehalten und gegen Bewegungen in der Seit- X und Querrichtung Z gesichert.

Das Türelement 6 ist in der Höhenrichtung Y an Halteorganen 14 in Form von Riemen gehalten. Die Halteorgane 14 sind mit einem ersten Abschnitt 15 am Türelement 6 und mit einem zweiten Abschnitt 16 an einem Gegengewicht 17 für das Türelement 6 befestigt. Die Halteorgane 14 sind jeweils über ein Umlenkorgan 19 geführt, welches den ersten Abschnitt 15 vom zweiten Abschnitt 16 der Halteorgane trennt, wobei die Länge des ersten Abschnitts 15 und des zweiten Abschnitts 16 mit Bewegungen des Türelementes 6 in der Höhenrichtung Y variiert.

Der erste Abschnitt 15 und der zweite Abschnitt 16 der Halteorgane 14 verlaufen parallel und sind jeweils in einem Abstand d₂ von der Türmittellinie M_{T} bzw. einem Abstand d₁ von einem seitlichen Rand 20 des Türelementes 6 mittels Befestigungselementen 21 an Befestigungspunkten 22 am Türelement 6 befestigt. Die Abstände d₁ und d₂ sind jeweils in der Seitrichtung X gemessen.

Analog zur Befestigung des ersten Abschnittes 15 der Halteorgane 14 am Türelement 6 sind die zweiten Abschnitte 16 der Halteorgane 14 mit Befestigungselementen 21' an Befestigungspunkten 22' am Gegengewicht 17 befestigt. Somit sind die Halteorgane 14 jeweils an sich bezüglich der Mittellinie M_{T} des Türelements 6 gegenüberliegenden Abschnitten des Türelements 6 symmetrisch um die Mittellinie M_{T} angeordnet. Dadurch ist eine Gewichtskraft G_{A} des Türelementes 6 gleichmäßig auf die Halteorgane 14 verteilt, auf welche die Gewichtskraft G_{A} des Türelementes 6 als Zugkraft übertragen wird. Mit anderen Worten sind die ersten Abschnitte 15 der Halteorgane 14 als Zugmittel zu betrachten, welche die Gewichtskraft G_{A} des Türelementes aufnehmen.

Die Umlenkorgane 14 tragen sowohl die Gewichtskraft G_{A} des Türelementes 6 als auch eine Gewichtskraft G_{B} des Gegengewichts 17. Um die Umlenkorgane 14 möglichst synchron zu bewegen, damit die ersten Abschnitte 15 und zweiten Abschnitte 16 der Halteorgane 14 jeweils eine gleiche Länge in der Höhenrichtung Y aufweisen und das Türelement 6 somit möglichst waagerecht gehalten ist, ist ein Synchronisierungsmittel 23 vorgesehen. Das Synchronisierungsmittel 23 synchronisiert die Bewegungen der Umlenkorgane 19. In der in Fig. 3 dargestellten Ausführungsform ist das Synchronisierungsmittel 23 als Synchronisierungswelle ausgestaltet, welche die Umlenkorgane 19 drehfest miteinander koppelt.

Durch die Synchronisierung bzw. drehfeste Kopplung der Umlenkorgane 19 werden die Befestigungspunkte 22, 22' am Türelement 6 bzw. Gegengewicht 17 in der Höhenrichtung Y stets parallel verschoben. Somit sind sowohl das Türelement 6 als auch das Gegengewicht 17 ausbalanciert gehalten. Das Türelement 6 wird möglichst ohne Dreh- oder Verschiebebewegungen in der Seitrichtung X an in der Führung 11 verschieblich gehaltenen seitlichen Rändern 20 des Türelementes 6 bewegt. Analog sind seitliche Führungselemente 25 des Gegengewichts 17 in einer Führung 24 für das Gegengewicht 17 der Höhenrichtung Y verschieblich gehalten und gegen Bewegungen in der Seitrichtung X sowie Querrichtung Z gesichert. Sollte über den seitlich am Türelement 6 angebrachten Griff 7 ein Drehmoment um einen Mittelpunkt P_{T} des Türelementes in das Türelement 6 eingeleitet werden, so werden Drehbewegungen des Türelementes 6 um den Mittelpunkt durch die synchronisierten Halteorgane 14 unterbunden oder zumindest so stark gemindert, dass ein Verkanten des Türelementes 6 in dessen Führung 11 oder ein Verkanten des Gegengewichts 17 in dessen Führung 24 verhindert wird.

Des Weiteren ist in Fig. 3 eine Feststelleinrichtung 26 dargestellt, die mittig, also auf der Mittellinie M_{T} liegend, an einem oberen Rand 27 des Türelementes 6 befestigt ist. Die Feststelleinrichtung 26 umfasst einen Elektromagneten 28 oder einen Dauermagneten 28', der in der Höhenrichtung Y vom Türelement 6 auf einem federgelagerten Stift sitzend nach oben ragt und ausgestaltet ist, mit einem ferromagnetischen Arretierungselement 18 im oberen Bereich des Türsystems 13 zusammenzuwirken, so dass er die Tür in der Öffnungsposition festhalten bzw. arretieren kann, indem er eine Arretierungs- bzw. Magnetkraft auf das Arretierungselement 18 auswirkt, die größer ist als nach unten strebende auf das Türelement 6 wirkende Gravitations- bzw. Schließkräfte.

Ferner ist in der Darstellung des Türsystems 13 in Fig. 3 am seitlichen Rand der Beschickungs- und/oder Entnahmeöffnung 5 ein Lichtgitter 29 angeordnet. Das Lichtgitter 29 kann beispielsweise in der Beschickungs- und/oder Entnahmeöffnung 5 befindliche Gegenstände erfassen und dies dem Bediengerät 8 oder einer zentralen elektronischen Steuerung der Lagervorrichtung 1 melden, damit entsprechende Sicherheitsmaßnahmen eingeleitet oder sicherheits- bzw. personengefährdende Prozeduren verhindert werden.

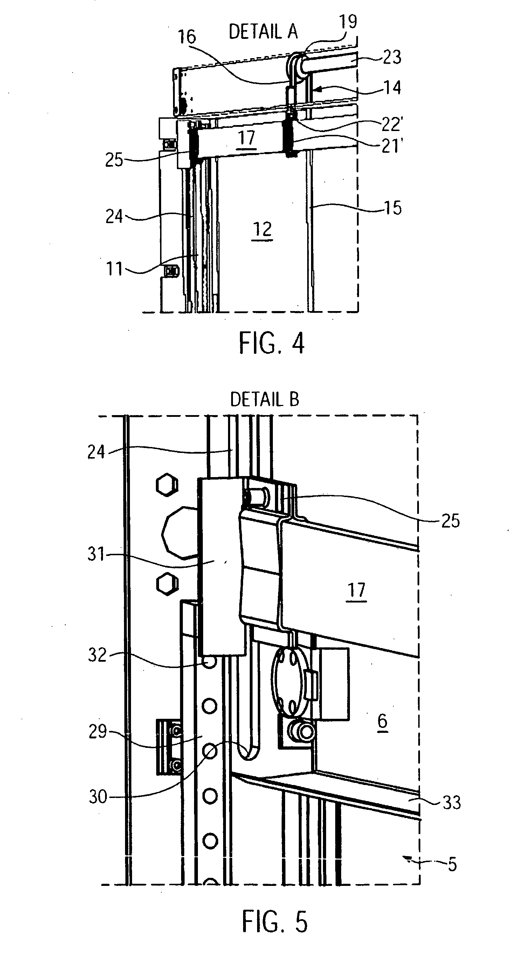

In Fig. 4 ist ein Detail A aus Fig. 3 perspektivisch dargestellt. Wie in Fig. 3 befindet sich das Türelement 6 in der Schließposition C und das Gegengewicht 17 in einer maximal nach oben geschobenen Position. In Fig. 4 wird besonders deutlich, dass der erste Abschnitt 15 des Halteorgans 14 das Türelement und der zweite Abschnitt 16 des Halteorgans 14 das Gegengewicht 17 hält. Ferner wird deutlich, dass die Führung 11 für das Türelement 6 und die Führung 24 für das Gegengewicht als parallel verlaufende Nuten oder Rillen ausgestaltet sind. Die Führung 24 des Ausgleichsgewichts 17 ist in der Querrichtung Z betrachtet hinter der Führung 11 des Türelementes 6 angeordnet ist. Mit anderen Worten befindet sich das Gegengewicht 17 in der Querrichtung Z von außerhalb der Beschickungs- und/oder Entnahmeöffnung 5 betrachtet hinter dem Türelement 6.

In Fig. 5 ist ein Detail B aus Fig. 3 vergrößert dargestellt. In Fig. 5 befindet sich das Türelement 6 im Gegensatz zu der Darstellung in Fig. 3 nahezu in der Öffnungsposition O. Das Gegengewicht 17 ist in der Höhenrichtung Y bis auf die Höhe eines oberen Endes des Lichtgitters 29 herabgefahren. Das Führungselement 25 des Gegengewichtes 17 befindet sich in der Führung 24 für das Gegengewicht 17 knapp oberhalb eines am unteren Ende der Führung 24 ausgebildeten Anschlags 30 für das Führungselement 25 des Gegengewichtes 17.

Am Führungselement 25 des Gegengewichts 17 ist ein Signalelement 31 in Form einer Schaltfahne befestigt, die sich in der in Fig. 5 gezeigten Darstellung knapp oberhalb eines in der Seitrichtung X wirkenden obersten Lichtgitterelementes des Lichtgitters 29 befindet.

In der Öffnungsposition O kann das Gegengewicht 17 bzw. dessen Führungselement 25 am Anschlag 30 anliegen. Das Signalelement 31 kann in der Öffnungsposition O zumindest das oberste Lichtgitterelement 32 wenigstens in der Seitrichtung X abdecken. Das oberste Lichtgitterelement 32 oder wahlweise mehrere der obersten Lichtgitterelemente 32 können durch ein Betätigen bzw. Abdecken mittels des Signalelementes 31 am Gegengewicht 17 oder dessen Führung 25 das Erreichen der Öffnungsposition O signalisieren.

In der Öffnungsposition O befindet sich ein unterer Rand 33 des Türelementes 6 unterhalb des Gegengewichts 17. Das Gegengewicht 17 ist somit von außerhalb der Beschickungs- und/oder Entnahmeöffnung 5 in einer Projektion in der Querrichtung Z betrachtet vom Türelement 6 abgedeckt. Folglich ist eine Bedienperson vor einem unbeabsichtigten Eingreifen in den vertikalen Verschiebeweg des Gegengewichts 17 bzw. dessen Führung 24 geschützt.

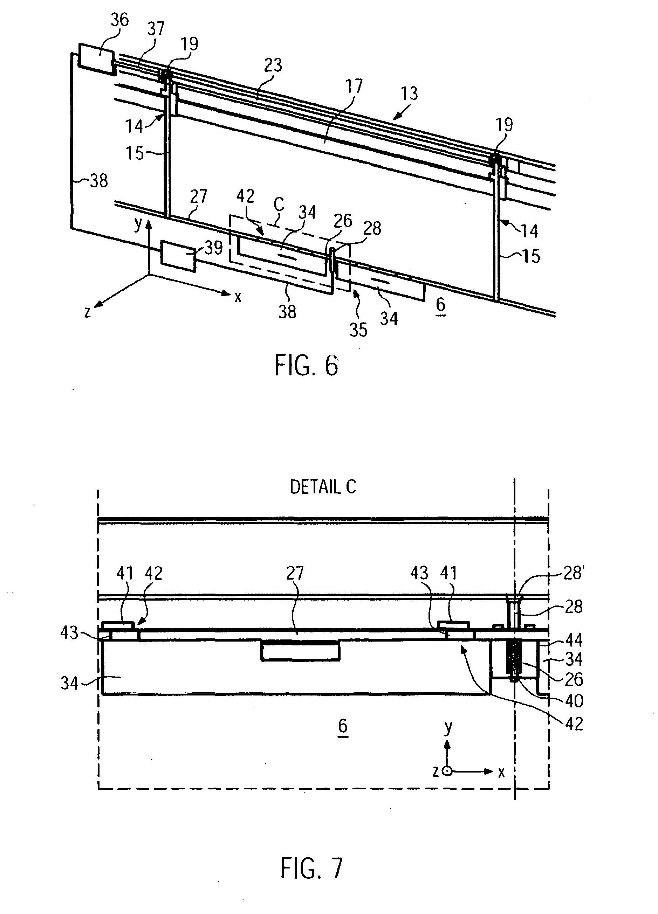

In Fig. 6 ist ein Teilbereich einer weiteren Ausführungsform des Türsystems 13 einer erfindungsgemäßen Lagervorrichtung 1 in einer schematischen Perspektivansicht gezeigt. Das Türelement 6 befindet sich in der Öffnungsposition O. Am Türelement 6 sind zwei Gewichtsmodule 34 befestigt, die ein Ausgleichsgewicht 35 bilden. Zusätzlich zur Türgewichtskraft G_{A} bewirken die Gewichtsmodule 34 bzw. das Ausgleichsgewicht 35 eine in der Höhenrichtung Y nach unten gerichtete Ausgleichsgewichtskraft G_{C}, die zusammen mit der Gewichtskraft G_{A} des Türelements 6 zu einer Türgesamtgewichtskraft G_{G} beiträgt. Die Türgesamtgewichtskraft G_{G} kann die Gegengewichtskraft G_{B} des Gegengewichts 17 überschreiten, so dass das Türelement 6, so lange es nicht in der Öffnungsposition O arretiert ist, stets automatisch von der Gravitation in die Schließposition C gezogen wird.

Des Weiteren ist in der in Fig. 6 gezeigten Ausführungsform ein Elektroantrieb 36 über einen Antriebsstrang 37 kraftübertragend mit dem Umlenkorgan 19 und über das Synchronisierungsmittel 23 mit dem weiteren Umlenkorgan 19 gekoppelt. Eine vom Elektroantrieb 36 auf die Umlenkorgane 19 bzw. das Synchronisierungsmittel 23 übertragende Antriebskraft kann das Öffnen und/oder Schließen des Türelementes 6 vereinfachen und beschleunigen bzw. ein automatisches Öffnen und/oder Schließen ermöglichen.

Über ein elektronisches Kommunikationsmittel 38 ist der Elektroantrieb 36 signalübertragend mit der Feststelleinrichtung 26 verbunden. Auf dem Signalübertragungsweg kann eine elektronische Steuereinheit 39 zwischengeschaltet sein, die ihrerseits mit einer zentralen Steuerung (nicht gezeigt) der Lagervorrichtung 1 und/oder dem Bediengerät 8 signalübertragend verbunden sein kann.

In Fig. 7 ist ein Detail C des in Fig. 6 dargestellten Türsystems 13 in einer schematischen Vorderansicht gezeigt. Das Türelement 6 befindet sich in der Öffnungsposition O. Der Elektromagnet 28 bzw. Feststelleinrichtung 26 befindet sich in Kontakt mit dem Arretierungselement 18 und sichert das Türelement 6 gegen Bewegungen in der Höhenrichtung Y, insbesondere gegen ein unbeabsichtigtes Verschließen. Ein Dämpfungselement 40 in Form einer Spiralfeder stützt den Elektro- oder Dauermagneten 28, 28' bzw. einen mit dem Arretierungselement 18' in Kontakt stehenden Teil der Feststelleinrichtung 26 in der Höhenrichtung ab, so dass ein Aufschlagen der Feststelleinrichtung 26 am Arretierungselement 18 beim Hochschnellen des Türelementes 6 in die Öffnungsposition O gedämpft wird.

Das Türelement 6 kann in der Schließposition C entgegen der Wirkung des Dämpfungselementes 40, insbesondere wenn dieses als Feder- oder Spiralfeder ausgestaltet ist, weiter nach oben geschoben werden. Damit ist ein Nachlaufweg des Türelementes 6 realisierbar. Um den Nachlaufweg sicherzustellen, ist es insbesondere vorteilhaft, wenn sich das Gegengewicht 17 in der Öffnungsposition wie in Fig. 5 dargestellt, oberhalb eines am unteren Ende der Führung 24 ausgebildeten Anschlags 30 befindet. Das Signalelement 31 kann zur Überwachung des Nachlaufweges eingesetzt werden, indem es beispielsweise nicht nur diejenigen Lichtgitterelemente 32 abdeckt, die das Erreichen der Öffnungsposition O signalisieren, sondern weitere entlang des Nachlaufweges angeordnete Lichtgitterelemente 32 oder sonstige elektronische Geber beeinflusst.

Durch den Nachlaufweg kann insbesondere eine Fehlbedienung des Türelementes 6 signalisiert und gegebenenfalls eine Notabschaltung der Lagervorrichtung 1 oder zumindest ein Warnsignal ausgegeben werden. So ist es beispielsweise vorstellbar, dass eine Bedienperson versucht, die Entnahmeöffnung zu vergrößern, um Lagergüter mit unzulässigen Abmaßen einzulagern, indem die Tür aus der Öffnungsposition O weiter nach oben geschoben und eventuell mit einem Hilfsmittel in einer über die Öffnungsposition O hinausgeschobenen unzulässigen Position verkeilt wird. In diesem Fall würde das Signalelement 31 die entlang des Nachlaufweges angeordneten Lichtgitterelemente 32 abdecken und die Fehlbedienung wäre erkannt.

Des Weiteren ist in Fig. 7 verdeutlicht, dass das Gewichtsmodul 34 mittels Befestigungselementen 41 am Türelement 6 befestigt ist. Die Befestigungselemente 41 sind an Aufnahmen 42 durch den oberen Rand 27 des Türelementes 6 von unten hindurch- und in der Seitrichtung X auf den oberen Rand 27 des Türelementes 6 aufgeschoben.

Die Gewichtsmodule 34 sind jeweils auf sich gegenüberliegenden Seiten der Mittellinie M_{T} des Türelementes 6 in der Seitrichtung X in entgegengesetzten Richtungen von der Mittellinie Mr des Türelementes 6 aus auf den oberen Rand 27 des Türelementes 6 aufgeschoben. In einen dabei gebildeten Zwischenraum zwischen den Gewichtsmodulen 34 ist die Feststelleinrichtung 26 in der Höhenrichtung Y eingeschoben, so dass die Gewichtsmodule seitlich an der Feststelleinrichtung 26 anliegen und diese Bewegungen der Gewichtsmodule 34 in Richtung der Mittellinie M_{T} des Türelementes 6 unterbindet. Somit sind die Gewichtsmodule 34, die gewissermaßen spiegelsymmetrisch um die Mittellinie M_{T} des Türelementes 6 angeordnet sind, zwischen einem Seitenanschlag 43 der Aufnahmen 42 und der Feststelleinrichtung 26 in der Seitrichtung X gegen Bewegungen gesichert bzw. durch die als ein Sicherungsmittel 44 für die Gewichtsmodule 34 fungierende Feststelleinrichtung 26 verriegelt.

Im Rahmen des Erfindungsgedankens sind Abweichungen von den oben beschriebenen Ausführungsbeispielen möglich. So kann die Lagervorrichtung 1 den jeweiligen Anforderungen gemäß ihrer Höhe, Breite und Tiefe variiert und mit einer beliebigen Anzahl von Beschickungs- und/oder Entnahmestationen 4 versehen werden. Die Verkleidungselemente 2 können beliebig zu einem Gehäuse 3 kombiniert werden.

Die Türelemente 6 können beliebig einstückig oder aus einer Vielzahl von gegenüber einander bewegungsstarren oder flexiblen Elementen zusammengesetzt sein. Das Türelement 6 mit einem Griff 7 zu versehen, ist zum manuellen Bedienen des Türelementes 6 hilfreich, jedoch insbesondere bei einem elektromotorisch angetriebenen Türsystem 13 nicht zwingend erforderlich.

Das Bediengerät 8 kann mit beliebigen elektronischen Anzeige- und Bedienelementen ausgestattet sein, die es einer Bedienperson ermöglichen, auf möglichst effizientem Wege mit der Lagervorrichtung 1 zu kommunizieren. Die Bedien- und Anzeigeelemente können insbesondere Monitore, LCD- und TFT-Displays, Knöpfe, Schalter, Sender, Sensoren, Drucktaster, Druckübertragungselemente, Touch-Screens, Funkübertragungseinrichtungen und sonstige elektronischen Kommunikationselemente umfassen. Eine Konsole 9 an der Beschickungs- und/oder Entnahmestation 4 anzubringen, ist hilfreich, jedoch nicht zwingend erforderlich. Automatische Fördervorrichtungen 10 sind hinreichend bekannt und können beliebig aus Lagergut- bzw. Lagergutträgeraufnahmen sowie Horizontal- und Vertikalantriebseinrichtungen zusammengesetzt sein.

Die Halteorgane 14 können beliebig ausgestaltet sein, um die Gewichtskraft G_{A} des an den Halteorganen 14 hängenden oder von ihnen abgestützten Türelementes 6 aufzunehmen. Beispielsweise können als flexible Haltemittel Riemen, vorzugsweise Zahn- und Rippenriemen, Antriebsketten oder Drahtseile eingesetzt werden. Jedoch ist es auch möglich, starre Haltemittel in Form von Zahn- oder Gewindestangen in Verbindung mit Zahnrädern und/oder pneumatischen Zylindern einzusetzen, um die Gewichtskraft G_{A} des Türelementes 6 aufzunehmen. So können die Halteelemente 14 in Form von Zahnrädern direkt am Türelement 6 und die Zahnstangen in der Führung 11 geführt werden.

Es kann insbesondere von Vorteil sein, die Halteorgane 14 als formschlüssige, mit den Umlenkorganen 19 zusammenwirkende Elemente auszubilden. Eine Verwendung von Zahnriemen oder Ketten als Halteorgane 14 ist einer Verwendung von einfachen Riemen vorzuziehen, da Letztere in der Regel nicht form-, sondern lediglich reibschlüssig mit den Umlenkorganen 19 zusammenwirken.

Als weitere Alternative können Halteorgane 14 durch Seile und die Umlenkorgane 19 als durch das Synchronisierungsmittel 23 verbundene Seiltrommeln ausgestaltet sein, die formschlüssig mit den Seilen verbunden sind. Das Auf- bzw. Abwickeln der Seile auf bzw. von den Trommeln kann ein präzises Öffnen bzw. Schließen des Türelementes 6 ermöglichen, wenn sichergestellt ist, dass die Anzahl der Wicklungen auf allen eingesetzten Seiltrommeln im Wesentlichen gleich ist. Diese Ausführungsform ermöglicht es, das Gegengewicht 17 an anderen Orten als wie bei den hierin dargestellten Ausführungsformen hinter dem Türelement 6 anzuordnen.

Des Weiteren ist es beim Einsatz von Seilen möglich, auf das Gegengewicht zu verzichten und die Gewichtskraft G_{A} des Türelementes 6 mittels eines Antriebs der Seiltrommeln beispielsweise durch ein Federelement auszugleichen, das als Energiespeicher wirkt und insbesondere als eine Spiralfeder ausgestaltet sein kann. Auch ist es möglich, verschieden große Seiltrommeln für den das Türelement 6 haltenden ersten Abschnitt 15 des Halteorgans 14 und den das Gegengewicht 17 haltenden zweiten Abschnitte 16 des Halteorgans 14 vorzusehen, wodurch ein Übersetzungsverhältnis zwischen Gewichts- und Gegengewichtskraft bzw. dem Verschiebeweg des Türelementes 6 und dem Verschiebeweg des Gegengewichtes 17 implementiert werden kann. Als weitere Ausgestaltungsmöglichkeit ist denkbar, aus den Umlenkorganen 19 und den Halteorganen 14 einen Flaschenzug, beispielsweise einen Faktorenflaschenzug zu bilden.

Die Umlenkorgane 19 können beliebig ausgestaltet und auf die Halteorgane 14 abgestimmt sein, um in Form von Umlenkrollen, Walzen, Zahnrädern und Riemenscheiben die Halteorgane 14 umzulenken und das Gewicht des Türelementes 6 bzw. die Türgesamtgewichtskraft G_{G} und/oder die Gegengewichtskraft G_{B} des Gegengewichts 17 aufzunehmen. Die Halteorgane 14 können den jeweiligen Anforderungen gemäß beliebig umgelenkt werden.

Die Befestigungspunkte 22, 22' am Türelement 6 bzw. am Gegengewicht 17 und die Abstände d₁ und d₂ sind den jeweiligen Anforderungen entsprechend beliebig wählbar. Eine in den oben gezeigten Ausführungsformen dargestellte symmetrische Aufhängung des Türelementes 6 und des Gegengewichtes 17 ist vorteilhaft.

Das Synchronisierungsmittel 23 kann wie in den dargestellten Ausführungsformen als Synchronisierungswelle ausgeführt sein, jedoch sind auch andere Synchronisierungsarten, wie beispielsweise Getriebe oder elektronische Synchronisierungseinrichtungen anwendbar.

Die Führungen 11, 24 für das Türelement 6 bzw. das Gegengewicht 17 sind den jeweiligen Anforderungen entsprechend beliebig ausführbar. Die Führungen 11 und 24 für das Türelement 6 bzw. des Gegengewichts 17 können alternativ als Schienen ausgestaltet sein, die mit in der Seitrichtung X offenen Nuten an dem Türelement 6 oder dem Gegengewicht zusammenwirken.

Die Feststelleinrichtung 26 kann mit einem Elektromagneten 28, einem Dauermagneten 28' oder mit anderen Feststellmechanismen ausgestattet sein, die beliebig mit einem Arretierungselement 18 zusammenwirken und unabhängig von der Verwendung eines Elektromagneten 28 von der Steuereinheit gesteuert sein können. Die Feststelleinrichtung 26 muss nicht zwangsläufig am Türelement 6, sondern kann auch am oberen Bereich der Beschickungs- und/oder Entnahmeöffnung 5 angeordnet sein. Dementsprechend kann das Arretierungselement 18 am Türelement 6 angeordnet sein. Insbesondere beim Einsatz von Magneten 28, 28' kann es sich bei dem Arretierungselement 18 um einen einfachen ferromagnetischen Abschnitt handeln, der ohnehin durch die ferromagnetische Eigenschaft eines im oberen Bereich der Beschickungs- und/oder Entnahmeöffnung 5 angeordneten Bauteils, wie einem Träger der Lagervorrichtung 1 gebildet sein kann. Falls auf ein automatisches Schließen des Türelements bei Stromausfall verzichtet werden kann, ist ein Dauermagnet 28' hinreichend.

Das Lichtgitter 29 kann aus einer beliebigen Anzahl von Lichtgitterelementen 32 gebildet werden, die über- und nebeneinander angeordnet sein können. Das Gegengewicht 17 kann den jeweiligen Anforderungen mit einem Signalelement 31 versehen sein, das mit dem Lichtgitter 29 oder anderen beliebigen Sensoreinrichtungen verbunden sein kann, um ein Erreichen einer Öffnungs- O oder Schließposition C des Türelementes 6 zu signalisieren. Das Signalelement 31 muss nicht zwangsläufig am Gegengewicht 17, sondern kann auch am Türelement 6 angeordnet bzw. mit diesem gekoppelt sein.

Das Gegengewicht 17 und/oder das Ausgleichsgewicht 35 des Türelementes 6 können aus einer beliebigen Anzahl von Gewichtsmodulen 34 zusammengesetzt sein.

Das elektronische Kommunikationsmittel 38 kann sowohl kabelgebunden als auch kabellos Informationen zwischen dem Elektroantrieb 36, dessen Antriebsstrang 37, der elektronischen Steuereinheit 39, einer zentralen Steuerung der Lagervorrichtung 1 und/oder dem Bediengerät 8 austauschen.

## Patentansprüche

1. Automatische Lagervorrichtung (1) mit einer Beschickungs- und/oder Entnahmeöffnung (5), mit einem in einer Höhenrichtung (Y) verschieblichen Türelement (6) zum Verschließen der Beschickungs- und/oder Entnahmeöffnung (5) und mit einem Halteorgan (14), das mechanisch mit dem Türelement (6) gekoppelt ist und einer Gewichtskraft (G_{A}) des Türelements entgegenwirkt, **dadurch gekennzeichnet, dass** wenigstens ein weiteres Halteorgan (14) quer zur Höhenrichtung (Y) vom anderen Halteorgan (14) beabstandet mit dem Türelement (6) gekoppelt ist und der Gewichtskraft (G_{A}) des Türelements (6) entgegenwirkt, dass die beiden Halteorgane (14) jeweils an sich bezüglich einer vertikalen Mittellinie (M_{T}) des Türelements (6) gegenüberliegenden Abschnitten des Türelements (6) angeordnet sind, und dass die beiden Halteorgane (14) mit einem in einer Führung (24) verschieblich gehaltenen Gegengewicht (17) für das Türelement (6) und durch ein Synchronisierungsmittel (23) synchron beweglich gekoppelt sind.

2. Lagervorrichtung (1) nach Anspruch 1, **dadurch gekennzeichnet, dass** die wenigstens zwei Halteorgane (14) jeweils ein Zugmittel (15) aufweisen, das jeweils über ein in der Höhenrichtung (Y) oberhalb des Türelements (6) angeordnetes Umlenkorgan (19) geführt ist, und dass das Synchronisierungsmittel (23) die Umlenkorgane (19) im Wesentlichen drehfest koppelt.

3. Lagervorrichtung (1) nach Anspruch 1 oder 2, **dadurch gekennzeichnet, dass** das Gegengewicht (17) über die Halteorgane (14) mit dem Türelement (6) verbunden ist, wobei eine Gegengewichtskraft (G_{B}) des Gegengewichts (23) größer ist als die Gewichtskraft (G_{A}) des Türelements (6).

4. Lagervorrichtung (1) nach Anspruch 3, **dadurch gekennzeichnet, dass** das Türelement (6) mit einem Ausgleichsgewicht (35) versehen ist und dass eine die Gewichtskraft (G_{A}) des Türelementes (6) und eine Ausgleichsgewichtskraft (G_{C}) des Ausgleichsgewichts (35) umfassende Türgesamtgewichtskraft (G_{G}) größer ist als die Gegengewichtskraft (G_{B}) des Gegengewichts (17).

5. Lagervorrichtung (1) nach Anspruch 3 oder 4, **dadurch gekennzeichnet, dass** das Gegengewicht (17) und/oder das Ausgleichsgewicht (35) jeweils aus einer Vielzahl von Gewichtsmodulen (34) zusammengesetzt sind bzw. ist.

6. Lagervorrichtung (1) nach Anspruch 5, **dadurch gekennzeichnet, dass** wenigstens ein Gewichtsmodul (34) am Türelement (6) und/oder Gegengewicht (17) eingehängt ist.

7. Lagervorrichtung (1) nach Anspruch 5 oder 6, **dadurch gekennzeichnet, dass** das wenigstens eine Gewichtsmodul (34) ein Befestigungselement (41) aufweist, das quer zur Höhenrichtung (Y) auf eine Aufnahme (42) am Türelement (6) und/oder dem Gegengewicht (17) aufgeschoben ist und eine Modulgewichtskraft (G_{M}) des Gewichtsmoduls (34) zumindest teilweise trägt.

8. Lagervorrichtung (1) nach Anspruch 7, **dadurch gekennzeichnet, dass** ein Sicherungsmittel (44) vorgesehen ist, durch welches das wenigstens eine Gewichtsmodul (34) gegen Entnahme gesichert ist.

9. Lagervorrichtung (1) nach einem der Ansprüche 1 bis 8, **dadurch gekennzeichnet, dass** eine Feststelleinrichtung (26) vorgesehen ist, mit deren Hilfe das Türelement (6) in einer Öffnungsposition (O) arretierbar ist.

10. Lagervorrichtung (1) nach Anspruch 9, **dadurch gekennzeichnet, dass** die Feststelleinrichtung (26) wenigstens einen Elektromagneten (28) und/oder Dauermagneten (28') umfasst.

11. Lagervorrichtung (1) nach einem der Ansprüche 9 oder 10, **dadurch gekennzeichnet, dass** die Feststelleinrichtung (26) gleichzeitig als Sicherungsmittel (44) dient.

12. Lagervorrichtung (1) nach einem der Ansprüche 9 bis 11, **dadurch gekennzeichnet, dass** zumindest eines der beiden Halteorgane (14) und/oder das Synchronisierungsmittel (23) Kraft übertragend an einen Elektroantrieb (36) gekoppelt sind bzw. ist, wobei der Elektroantrieb (36) und die Feststelleinrichtung (26) durch elektronische Kommunikationsmittel (38) Signal übertragend miteinander verbunden sind.

13. Lagervorrichtung (1) nach einem der Ansprüche 1 bis 11, **dadurch gekennzeichnet, dass** neben dem Türelement (6) ein Bediengerät (8) für die Lagervorrichtung (1) angeordnet und das Türelement (6) innerhalb eines Griffbereiches einer Bedienperson vom Bediengerät (8) entfernt mit einem Griff (7) versehen ist.

14. Lagervorrichtung (1) nach Anspruch 13, **dadurch gekennzeichnet, dass** eine in der Höhenrichtung (Y) verlaufende Mittelachse (M_{G}) des Griffes (7) quer zur Höhenrichtung (Y) von der vertikalen Mittellinie (M_{T}) des Türelementes (6) beabstandet ist.

## Claims

1. Automatic storage device (1) with a loading and/or unloading opening (5), having a door element (6), which is displaceable in a vertical direction (Y), for closing the loading and/or unloading opening (5) and having a holding element (14), which is mechanically coupled to the door element (6) and counteracts a weight force (G_{A}) of the door element, **characterised in that** at least one further holding element (14) spaced apart from the other holding element (14) and transverse to the vertical direction (Y) is coupled to the door element (6) and counteracts the weight force (G_{A}) of the door element (6), **in that** the two holding elements (14) are each arranged on opposite sections of the door element (6) with respect to a vertical centre line (M_{T}) of the door element (6), and **in that** the two holding elements (14) are coupled to a counter weight (17), which is displaceably held in a guide (24), for the door element (6) and are synchronously movably coupled by a synchronising means (23).

2. Storage device (1) according to Claim 1, **characterised in that** the at least two holding elements (14) each have a traction means (15) which in each case is guided via a deflection element (19) arranged in the vertical direction (Y) above the door element (6), and **in that** the synchronising means (23) couples the deflection elements (19) in an essentially torque-proof manner.

3. Storage device (1) according to Claim 1 or 2, **characterised in that** the counter weight (17) is connected to the door element (6) via the holding elements (14), wherein a counter weight force (G_{B}) of the counter weight (23) is greater than the weight force (G_{A}) of the door element (6).

4. Storage device (1) according to Claim 3, **characterised in that** the door element (6) is provided with a balancing weight (35), and **in that** an overall door weight force (G_{G}) comprising the weight force (G_{A}) of the door element (6) and a balancing weight force (G_{C}) of the balancing weight (35) is greater than the counter weight force (G_{B}) of the counter weight (17).

5. Storage device (1) according to Claim 3 or 4, **characterised in that** the counter weight (17) and/or the balancing weight (35) is or are respectively composed of a plurality of weight modules (34).

6. Storage device (1) according to Claim 5, **characterised in that** at least one weight module (34) is suspended on the door element (6) and/or counter weight (17).

7. Storage device (1) according to Claim 5 or 6, **characterised in that** the at least one weight module (34) has a fastening element (41) which is fitted transverse to the vertical direction (Y) onto a receiving attachment (42) on the door element (6) and/or the counter weight (17) and at least partly bears a module weight force (G_{M}) of the weight module (34).

8. Storage device (1) according to Claim 7, **characterised in that** a securing means (44) is provided, by means of which the at least one weight module (34) is secured against removal.

9. Storage device (1) according to any one of Claims 1 to 8, **characterised in that** a locking device (26) is provided, by means of which the door element (6) can be locked in an opening position (O).

10. Storage device (1) according to Claim 9, **characterised in that** the locking device (26) comprises at least one electromagnet (28) and/or permanent magnet (28').

11. Storage device (1) according to either of Claims 9 and 10, **characterised in that** the locking device (26) at the same time serves as a securing means (44).

12. Storage device (1) according to any one of Claims 9 to 11, **characterised in that** at least one of the two holding elements (14) and/or the synchronising means (23) is or are coupled to an electric drive (36) such that power can be transmitted, wherein the electric drive (36) and the locking device (26) are connected to one another by electronic communication means (38) such that signals can be transmitted.

13. Storage device (1) according to any one of Claims 1 to 11, **characterised in that** an operator device (8) for the storage device (1) is arranged next to the door element (6) and the door element (6) is provided with a handle (7) within the reaching area of the hands of an operator at a distance from the operator device (8).

14. Storage device (1) according to Claim 13, **characterised in that** a centre axis (M_{G}) of the handle (7) running in the vertical direction (Y) is spaced apart from the vertical centre line (M_{T}) of the door element (6) transverse to the vertical direction (Y).

## Revendications

1. Système de magasin de stockage automatique (1) comprenant une ouverture de chargement et/ou de prélèvement (5), comprenant un élément de porte (6) pouvant coulisser dans une direction de hauteur (Y) et destiné à fermer l'ouverture de chargement et/ou de prélèvement (5), et comprenant un organe de retenue (14), qui est couplé mécaniquement avec l'élément de porte (6) et agit à l'encontre d'une force de gravité (G_{A}) de l'élément de porte, **caractérisé en ce qu'**au moins un autre organe de retenue (14) est couplé à l'élément de porte (6) en étant espacé de l'autre organe de retenue (14) transversalement à la direction de hauteur (Y), et agit à l'encontre de la force de gravité (G_{A}) de l'élément de porte (6), **en ce que** les deux organes de retenue (14) sont agencés chacun sur des tronçons de l'élément de porte (6), mutuellement opposés par rapport à une ligne médiane verticale (M_{T}) de l'élément de porte (6), et **en ce que** les deux organes de retenue (14) sont couplés à un contrepoids (17) pour l'élément de porte (6), qui est maintenu coulissant dans un guidage (24), et sont mobiles de manière synchronisée grâce à un moyen de synchronisation (23).

2. Système de magasin de stockage (1) selon la revendication 1, **caractérisé en ce que** lesdits au moins deux organes de retenue (14) présentent chacun un moyen de traction (15), qui est guidé sur un organe de renvoi (19) agencé au-dessus de l'élément de porte (6) dans la direction de hauteur (Y), et **en ce que** le moyen de synchronisation (23) assure le couplage sensiblement fixe en rotation des organes de renvoi (19).

3. Système de magasin de stockage (1) selon la revendication 1 ou la revendication 2, **caractérisé en ce que** le contrepoids (17) est relié à l'élément de porte (6) par l'intermédiaire des organes de retenue (14), une force gravité de contrepoids (G_{B}) du contrepoids (17) étant plus grande que la force de gravité (G_{A}) de l'élément de porte (6).

4. Système de magasin de stockage (1) selon la revendication 3, **caractérisé en ce que** l'élément de porte (6) est muni d'une masselotte d'équilibrage (35), et **en ce qu'**une force de gravité totale de la porte (G_{G}) comprenant la force de gravité (G_{A}) de l'élément de porte (6) et une force de gravité de masselotte d'équilibrage (G_{C}) de la masselotte d'équilibrage (35), est plus du grande que la force de gravité de contrepoids (G_{B}) du contrepoids (17).

5. Système de magasin de stockage (1) selon la revendication 3 ou la revendication 4, **caractérisé en ce que** le contrepoids (17) et/ou la masselotte d'équilibrage (35) est ou respectivement sont composés chacun d'une pluralité de modules de poids (34).

6. Système de magasin de stockage (1) selon la revendication 5, **caractérisé en ce qu'**au moins un module de poids (34) est accroché sur l'élément de porte (6) et/ou le contrepoids (17).

7. Système de magasin de stockage (1) selon la revendication 5 ou la revendication 6, **caractérisé en ce que** ledit au moins un module de poids (34) présente un élément de fixation (41), qui est engagé, transversalement à la direction de hauteur (Y), sur un logement de réception (42) sur l'élément de porte (6) et/ou le contrepoids (17), et supporte au moins partiellement une force de gravité de module de poids (G_{M}) du module de poids (34).

8. Système de magasin de stockage (1) selon la revendication 7, **caractérisé en ce qu'**il est prévu un moyen de sécurisation (44), grâce auquel ledit au moins un module de poids (34) est sécurisé à l'encontre de son enlèvement.

9. Système de magasin de stockage (1) selon l'une des revendications 1 à 8, **caractérisé en ce qu'**il est prévu un dispositif d'immobilisation (26) à l'aide duquel l'élément de porte (6) peut être arrêté dans une position d'ouverture (O).

10. Système de magasin de stockage (1) selon la revendication 9, **caractérisé en ce que** le dispositif d'immobilisation (26) comprend au moins un électroaimant (28) et/ou un aimant permanent (28').

11. Système de magasin de stockage (1) selon l'une des revendications 9 ou 10, **caractérisé en ce que** le dispositif d'immobilisation (26) sert simultanément de moyen de sécurisation (44).

12. Système de magasin de stockage (1) selon l'une des revendications 9 à 11, **caractérisé en ce que** l'un au moins des deux organes de retenue (14) et/ou le moyen de synchronisation (23) est/ou sont couplés à un entrainement électrique (36), sur le plan de la transmission de force, l'entraînement électrique (36) et le dispositif d'immobilisation (26) étant reliés mutuellement, sur le plan de la transmission de signal, par des moyens de communication électroniques (38).

13. Système de magasin de stockage (1) selon l'une des revendications 1 à 11, **caractérisé en ce qu'**à côté de l'élément de porte (6) est agencé un appareil de commande de service (8) pour le système de magasin de stockage (1), et l'élément de porte (6) est muni d'une poignée (7), à l'intérieur d'une zone de préhension d'une personne de service, et de manière éloignée de l'appareil de commande de service (8).

14. Système de magasin de stockage (1) selon la revendication 13, **caractérisé en ce qu'**un axe médian (M_{G}) de la poignée (7), qui s'étend dans la direction de hauteur (Y), est espacé, transversalement à la direction de hauteur (Y), de la ligne médiane verticale (M_{T}) de l'élément de porte (6).
